# DEMANDE DE BREVET EUROPEEN

(11) **EP 3 095 330 A1**
(43) Date de publication de la demande: **23.11.2016**
(21) Numéro de dépôt: 16176530.0
(22) Date de dépôt: 26.06.2013
(51) Int. Cl.: A23C 9/12

(54) **YAOURTIERE DOMESTIQUE ELECTRIQUE ADAPTEE A DES AMBIANCES FROIDES ET/OU CHAUDES**

(30) Priorité: 29.06.2012 FR 1256283
(62) Demande divisionnaire de: 13744638.1
(71) Demandeur: SEB S.A., 69130 Ecully (FR)
(72) Inventeur: CHARLES, Patrick, 65290 Louey (FR); LACOURPAILLE, Gérard, 65380 Ossun (FR); ASTEGNO, Jean-Paul, 64420 Espoey (FR); BLOND, Laurent, 21200 Beaune (FR); SICARD, Mariette, 21260 Veronnes (FR)
(74) Mandataire: Bourrières, Patrice

(57) **Abrégé**

- L'invention concerne une yaourtière domestique électrique, comportant une enceinte (1) logeant au moins un récipient (2) prévu pour recevoir une préparation à base de lait et de ferments, des moyens de chauffe (4), ainsi que des moyens de pilotage (5) comprenant un capteur (30) pour mesurer la température, un microprocesseur (31) comportant au moins un programme de réalisation de préparation fermentée, et un dispositif de commande (32) comportant au moins une configuration de commande pour la réalisation d'un type de préparation fermentée.
- Selon l'invention, le microprocesseur (31) comporte au moins un autre programme de réalisation de préparation fermentée et le dispositif de commande (32) dans la configuration de commande met en oeuvre soit le programme de réalisation de préparation fermentée, soit l'autre ou l'un des autres programmes de réalisation de préparation fermentée, en fonction d'une température de départ mesurée par le capteur (30).
- L'invention concerne également un procédé de fonctionnement de la yaourtière domestique électrique précitée.

## Description

La présente invention concerne le domaine technique de la fabrication des yaourts.

La présente invention concerne plus particulièrement, mais non exclusivement, la fabrication des yaourts dans une yaourtière domestique électrique.

Les yaourtières domestiques électriques comportent usuellement une enceinte logeant un ou plusieurs récipients, ainsi que des moyens de chauffe aptes à porter la température de la préparation disposée dans le ou les récipients à l'intérieur d'un intervalle de température permettant la fabrication de yaourt, usuellement compris entre 40°C et 50°C. Ce mode de contrôle de température peut également être appliqué à la fabrication de fromage blanc (température de fermentation entre 35°C et 40°C) ou de lait fermenté type kéfir (température de fermentation entre 26°C et 30°C).

Une première famille de yaourtières existantes repose sur le chauffage de la préparation en utilisant un composant chauffant agencé dans de la paraffine, tel que décrit dans le document FR 2 244 397. Ce document propose de contrôler la température ambiante autour des pots pour prendre en compte les dispersions de puissance du composant chauffant, en utilisant un limiteur de température pour arrêter l'alimentation du composant chauffant. Une telle réalisation permet d'obtenir un appareil adapté à l'utilisation de lait à 8°C, sortant du réfrigérateur, ou à 20°C, à température ambiante. Un inconvénient de ces appareils réside dans l'apport thermique limité à la première partie de la durée nécessaire à la réalisation des yaourts. L'utilisation de ces appareils dans une pièce fraîche contribue à réduire plus fortement la température dans l'enceinte lors de la deuxième partie de la durée nécessaire à la réalisation des yaourts, il peut en résulter des yaourts peu fermes. Un autre inconvénient réside dans la fabrication peu aisée du dispositif de chauffe utilisant de la paraffine.

Une seconde famille de yaourtières existantes repose sur le chauffage de la préparation en utilisant un élément chauffant de faible puissance agencé dans l'air ou contre le fond d'une cuve, tel que décrit notamment dans le document FR 2 829 907. La montée en température de la préparation est beaucoup plus lente et peut s'étendre sur plus de six heures, en nécessitant trois à cinq heures pour atteindre une valeur de température permettant la fabrication de yaourt. Un inconvénient de ces appareils réside dans leur sensibilité à la température ambiante ainsi qu'à la température de la préparation utilisée. La très faible puissance de ces appareils peut en effet conduire à des températures de fonctionnement insuffisamment élevées favorisant l'obtention de yaourts peu fermes et peu onctueux. Notamment, les yaourts redeviennent très liquides après brassage.

Une troisième famille de yaourtières existantes, décrite notamment dans le document EP 2 422 626, utilise des pots agencés dans une enceinte à distance d'une base chauffante, avec un apport thermique plus important dans une phase initiale que dans une phase ultérieure. Une telle réalisation permet notamment d'obtenir des yaourts plus fermes.

Un but de la présente invention est d'obtenir des préparations fermentées telles que des yaourts, du fromage blanc ou du lait fermenté, qui soient de bonne qualité même lorsque l'appareil est utilisé dans une pièce présentant une température ambiante plus chaude que la température ambiante usuelle.

Un autre but de la présente invention est d'obtenir des préparations fermentées telles que des yaourts, du fromage blanc ou du lait fermenté, qui soient de bonne qualité même lorsque l'appareil est utilisé dans une pièce présentant une température ambiante plus froide que la température ambiante usuelle.

Un autre but de la présente invention est d'obtenir des préparations fermentées telles que des yaourts, du fromage blanc ou du lait fermenté, qui soient de bonne qualité même lorsque l'appareil n'a pas complètement refroidi.

Un autre but de la présente invention est de faciliter l'obtention de yaourts dits à 0% de matière grasse, qui présentent de bonne qualité.

Un autre but de la présente invention est de faciliter l'obtention de yaourts ou de fromages blancs qui ne soient pas trop liquides, notamment lorsque préparés dans une pièce fraîche.

Ces buts sont atteints avec une yaourtière domestique électrique, comportant une enceinte logeant au moins un récipient prévu pour recevoir une préparation à base de lait et de ferments, des moyens de chauffe associés à l'enceinte, ainsi que des moyens de pilotage pour contrôler l'alimentation des moyens de chauffe, les moyens de pilotage comprenant un capteur pour mesurer la température, un dispositif de commande comportant au moins une configuration de commande pour la réalisation d'un type de préparation fermentée, et un microprocesseur comportant au moins un programme de réalisation de préparation fermentée, du fait que le microprocesseur comporte au moins un autre programme de réalisation de préparation fermentée et que le dispositif de commande dans la configuration de commande met en oeuvre soit le programme de réalisation de préparation fermentée, soit l'autre ou l'un des autres programmes de réalisation de préparation fermentée, en fonction d'une température mesurée par le capteur. Les températures utilisées pour la réalisation de préparations fermentées telles que yaourt, fromage blanc ou lait fermenté sont relativement proches de la température ambiante et rendent difficile un pilotage optimal de la température de la préparation fermentée dans un intervalle étendu de températures ambiantes. La régulation de l'alimentation des moyens de chauffe est réalisée en fonction de températures mesurées dans l'appareil à l'extérieur de la préparation. Il est ainsi difficile d'obtenir une image thermique fiable de la température de la préparation pour un intervalle étendu de températures ambiantes. L'invention permet de restreindre les intervalles de températures ambiantes dans lesquels sont utilisés les programmes de réalisation de préparations fermentées. Les images thermiques de la préparation sont ainsi plus fiables et permettent d'obtenir de meilleurs résultats. La sélection automatique d'un programme de réalisation de préparations fermentées parmi plusieurs, qui soit adapté à l'intervalle de température dans lequel se trouve la température mesurée, permet d'obtenir un meilleur fonctionnement de l'appareil pour une gamme plus étendue de températures. L'utilisation de ferments pour réaliser des yaourts à 0%, très sensibles à la température, est également facilitée.

Avantageusement alors, le programme de réalisation de préparation fermentée comporte une phase initiale de fonctionnement et une phase ultérieure de fonctionnement, la puissance moyenne des moyens de chauffe dans la phase ultérieure de fonctionnement étant inférieure à la puissance moyenne des moyens de chauffe dans la phase initiale de fonctionnement. Cette disposition permet une montée en température plus rapide mais aussi plus précise.

Avantageusement alors, les moyens de chauffe sont régulés en température et la phase initiale de fonctionnement du programme de réalisation de préparation fermentée utilise au moins une température de consigne initiale supérieure à une température de consigne ultérieure de la phase ultérieure de fonctionnement du programme de réalisation de préparation fermentée. Cette disposition permet d'utiliser des moyens de chauffe de puissance importante, sans nécessiter un contrôle précis de la puissance nominale de ces moyens de chauffe, plutôt que des moyens de chauffe de puissance calibrée adaptée au chauffage de la préparation à réaliser.

Selon une forme de réalisation avantageuse, la température de consigne initiale est identique pour le programme de réalisation de préparation fermentée et le ou au moins l'un des autres programmes de réalisation de préparation fermentée, et la durée de la phase initiale de fonctionnement du programme de réalisation de préparation fermentée diffère de la durée de la phase initiale de fonctionnement du ou d'au moins l'un des autres programmes de réalisation de préparation fermentée. La température de consigne initiale vise à interrompre la chauffe et n'a pas de relation directe avec la température ambiante. Une telle disposition permet de simplifier la réalisation de l'appareil.

Selon une forme de réalisation adaptée à la réalisation de préparations fermentées en ambiance froide, le ou au moins l'un des autres programmes de réalisation de préparation fermentée est prévu pour une ambiance froide et comporte une phase initiale de fonctionnement utilisant au moins une température de consigne initiale et une phase ultérieure de fonctionnement utilisant au moins une température de consigne ultérieure, et la durée de la phase initiale de fonctionnement dudit autre programme de réalisation de préparation fermentée prévu pour une ambiance froide est supérieure à la durée de la phase initiale de fonctionnement du programme de réalisation de préparation fermentée. Cette disposition notamment permet d'améliorer la fermeté des yaourts préparés en ambiance froide.

Avantageusement alors, l'écart entre la température de consigne initiale et la température de consigne ultérieure est plus important pour le programme de réalisation de préparation fermentée que pour le ou au moins l'un des autres programmes de réalisation de préparation fermentée prévus pour une ambiance froide. Les déperditions thermiques plus importantes en ambiance froide nécessitent un apport thermique plus important tout au long du fonctionnement de l'appareil.

Avantageusement encore, la température de consigne ultérieure du ou d'au moins l'un des autres programmes de réalisation de préparation fermentée prévus pour une ambiance froide est identique à la température de consigne initiale du ou d'au moins l'un des autres programmes de réalisation de préparation fermentée prévus pour une ambiance froide. En d'autres termes, au moins un programme de préparation de yaourt ou de fromage blanc prévu pour une ambiance froide comporte une phase de fonctionnement utilisant une température de consigne ultérieure supérieure à la température de consigne ultérieure du programme de préparation de yaourt ou de fromage blanc.

Selon une forme de réalisation adaptée à la réalisation de préparations fermentées en ambiance chaude, le ou au moins l'un des autres programmes de réalisation de préparation fermentée est prévu pour une ambiance chaude et comporte une phase initiale de fonctionnement utilisant au moins une température de consigne initiale et une phase ultérieure de fonctionnement utilisant au moins une température de consigne ultérieure, et la durée de la phase initiale de fonctionnement dudit autre programme de réalisation de préparation fermentée prévu pour une ambiance chaude est inférieure à la durée de la phase initiale de fonctionnement du programme de réalisation de préparation fermentée. Cette disposition permet notamment d'obtenir de meilleurs résultats lors de la réalisation de yaourts dits à 0% de matière grasse (devant contenir moins de 0,5 g de matière grasse pour 100 g selon la réglementation).

Avantageusement alors, l'écart entre la température de consigne initiale et la température de consigne ultérieure est moins important pour le programme de réalisation de préparation fermentée que pour le ou au moins l'un des autres programmes de réalisation de préparation fermentée prévus pour une ambiance chaude. Les déperditions thermiques moins importantes en ambiance chaude nécessitent un apport thermique moins important tout au long du fonctionnement de l'appareil.

Selon une forme de réalisation adaptée à la réalisation successives de préparations fermentées, au moins un programme de réalisation de préparation fermentée est prévu pour une ambiance très chaude et comporte une phase de fonctionnement utilisant une température de consigne correspondant à la température de consigne ultérieure du programme de réalisation de préparation fermentée. Ainsi l'appareil venant d'être utilisé et encore chaud peut être réutilisé pour réaliser une nouvelle préparation, en minimisant l'impact sur la qualité de réalisation de la nouvelle préparation.

Selon un mode de réalisation avantageux, l'enceinte comporte une base chauffante comprenant une plaque de chauffe sous laquelle sont agencés les moyens de chauffe, et le capteur est monté sous la plaque de chauffe à distance des moyens de chauffe. Ces dispositions permettent d'utiliser également le capteur pour la régulation des moyens de chauffe.

Avantageusement encore, la base chauffante est surmontée d'un couvercle principal. Cette disposition contribue à limiter les déperditions thermiques tout en offrant un accès aisé au récipient.

Avantageusement encore, ledit récipient est suspendu au dessus et à distance de la base chauffante. Cette disposition contribue à limiter les échauffements de la préparation contenue dans le récipient.

Avantageusement alors, l'enceinte comporte un support de récipient intercalé entre la base chauffante et le couvercle principal. Cette disposition permet de faciliter la manipulation du récipient.

Ces buts sont atteints également avec un procédé d'obtention de préparation fermentée mis en oeuvre dans une yaourtière domestique électrique selon l'une au moins des caractéristiques précitées, comprenant les étapes suivantes :
- activation d'une configuration de commande du dispositif de commande pour la réalisation d'un type de préparation fermentée,
- réalisation d'une mesure de température en utilisant le capteur,
- en fonction de la température mesurée, sélection et mise en oeuvre du programme de réalisation de préparation fermentée ou du ou de l'un des autres programmes de réalisation de préparation fermentée.

L'invention sera mieux comprise à l'étude d'un exemple de réalisation, pris à titre nullement limitatif, illustré dans les figures annexées, dans lesquelles :
- la figure 1 est une vue en élévation et en coupe d'un exemple de réalisation d'une yaourtière domestique électrique selon l'invention.
- la figure 2 est une vue de dessus en perspective de la base chauffante de la yaourtière domestique électrique illustrée sur la figure 1,
- la figure 3 est une vue de dessous en perspective de la partie chauffante de la base chauffante illustrée sur la figure 2,
- la figure 4 est une représentation schématique de la température de la plaque de chauffe et de la température de la préparation lors d'un cycle de fabrication de yaourt utilisant la yaourtière domestique électrique illustrée sur la figure 1,
- la figure 5 représente l'évolution des températures de consigne de différents programmes de réalisation de yaourt avec une ambiance de départ tempérée et avec une ambiance de départ froide,
- la figure 6 représente l'évolution des températures de consigne de différents programmes de réalisation de yaourt avec une ambiance de départ tempérée et avec plusieurs ambiances de départ chaudes,
- la figure 7 représente l'évolution des températures de consigne de différents programmes de réalisation de yaourt avec une ambiance de départ tempérée et avec une ambiance de départ très chaude correspondant à une réutilisation de l'appareil.

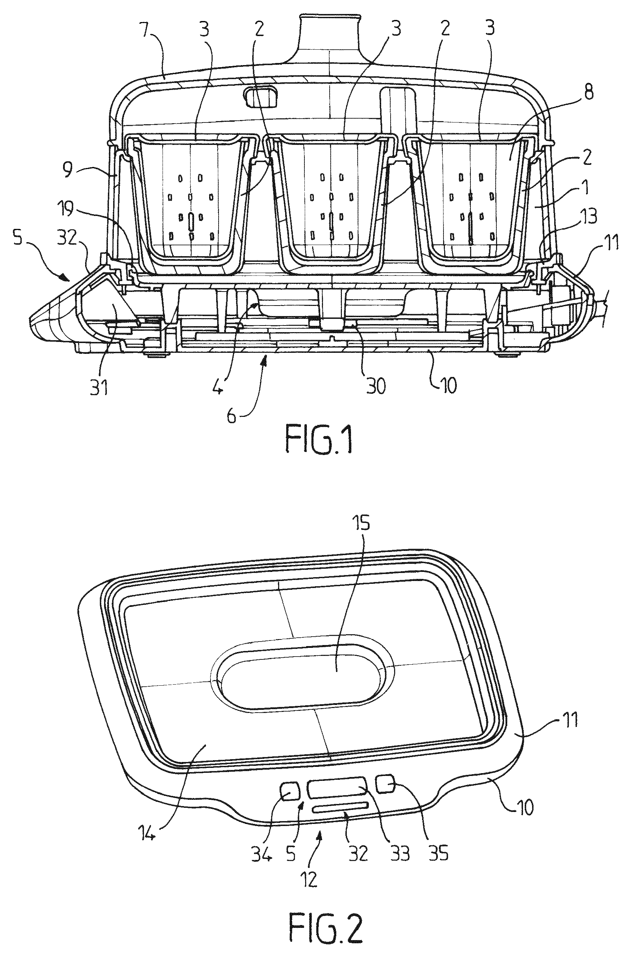

La figure 1 montre une yaourtière domestique électrique, comportant une enceinte 1 logeant au moins un récipient 2 prévu pour recevoir une préparation à base de lait et de ferments. L'enceinte 1 comporte une base chauffante 6. L'enceinte 1 comporte des moyens de chauffe 4 associés à l'enceinte 1, ainsi que des moyens de pilotage 5 aptes à contrôler les moyens de chauffe 4. Les moyens de chauffe 4 et les moyens de pilotage 5 sont agencés dans la base chauffante 6. La base chauffante 6 est surmontée d'un couvercle principal 7. L'enceinte 1 est prévue pour loger douze récipients 2. Les récipients 2 sont avantageusement réalisés en verre. Les récipients 2 peuvent être équipés de couvercles 3. De même, les récipients 2 peuvent comprendre un réceptacle interne perforé 8 pour la préparation de fromage blanc ou de faisselle.

Dans le mode de réalisation illustré sur les figures, l'enceinte 1 comporte un support 9 de récipient 2 intercalé entre la base chauffante 6 et le couvercle principal 7. Le couvercle principal 7 repose sur le support 9. Les récipients 2 sont suspendus au dessus et à distance de la base chauffante 6. A cet effet le support 9 comprend un plateau muni d'ouvertures permettant de positionner les récipients 2 dans l'appareil à distance de la base chauffante 6. Les récipients 2 sont chauffés par rayonnement, ce qui permet d'envisager des puissances de chauffe plus élevées.

Tel que représenté sur les figures 1 et 2, la base chauffante 6 comporte une embase 10, un capot annulaire externe 11 logeant un panneau de commande 12, et un capot annulaire interne 13 entourant une plaque de chauffe 14. Un joint 19 est interposé entre le capot annulaire interne 13 et la plaque de chauffe 14. La base chauffante 6 forme ainsi une sole chauffante, les moyens de chauffe 4 étant agencés sous la plaque de chauffe 14. Tel que mieux visible sur la figure 2, la plaque de chauffe 14 présente une conformation concave 15 centrale. Le couvercle principal 7 repose sur un bord supérieur de la base chauffante 6 à distance de la plaque de chauffe 14.

Tel que visible sur les figures 1 à 3, les moyens de pilotage 5 comprennent un capteur 30 pour mesurer la température, un microprocesseur 31 comportant au moins un programme de réalisation de préparation fermentée, et un dispositif de commande 32 comportant au moins une configuration de commande pour la réalisation d'un type de préparation fermentée. Les préparations fermentées peuvent être par exemple de type yaourt, de type fromage blanc ou de type lait fermenté.

Tel que mieux visible sur la figure 2, le dispositif de commande 32 comprend un afficheur 33, un premier sélecteur 34 pour choisir le programme de fonctionnement de l'appareil, un deuxième sélecteur 35 pour ajuster le temps de fermentation ou de cuisson du programme sélectionné. Les programmes de fonctionnement de l'appareil illustré sur les figures comportent par exemple les fonctions suivantes : yaourt, fromage blanc, crème dessert.

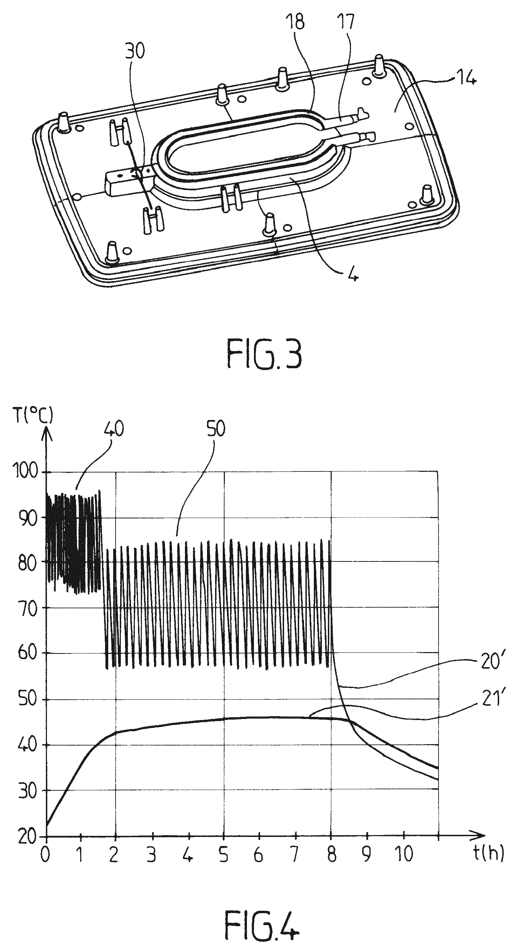

Tel que visible sur la figure 3, les moyens de chauffe 4 sont formés par un élément chauffant blindé 17 monté dans un logement 18 issu de la face inférieure de la plaque de chauffe 14. L'élément chauffant blindé 17 est monté sous la conformation concave 15 centrale. Le capteur 30 est monté sous la plaque de chauffe 14 à distance des moyens de chauffe 4. Le capteur 30 est par exemple de type CTN. La plaque de chauffe 14 est par exemple réalisée en aluminium pour assurer une répartition homogène de la température sur toute la surface de la plaque de chauffe 14 et de préférence en aluminium moulé permettant d'obtenir un bon rayonnement pour chauffer les récipients 2. La base chauffante 6 comprend ainsi des moyens de chauffage surfacique placés sous les récipients 2, permettant de réaliser une chauffe homogène sous les récipients 2.

Les moyens de pilotage 5 autorisent une alimentation des moyens de chauffe 4 s'étendant de préférence sur une durée d'au moins 4 heures. Les moyens de chauffe 4 ne sont pas nécessairement alimentés de manière continue. Selon le mode de réalisation préféré illustré sur les figures, les moyens de chauffe 4 sont régulés en température. Ainsi le dispositif de commande est associé à un dispositif de régulation thermostatique régulant l'alimentation électrique des moyens de chauffe 4 pour maintenir une température dans l'enceinte 1. Le dispositif de régulation thermostatique utilise par exemple le capteur 30 monté contre la plaque de chauffe 14. Le dispositif de commande 32 est associé à un relais prévu pour piloter l'alimentation des moyens de chauffe 4. L'utilisation d'un relais procure une solution économique pour réaliser le pilotage des moyens de chauffe 4. La durée de fonctionnement est par exemple de 8 heures, ce temps peut être ajusté si désiré à l'aide du deuxième sélecteur 35.

La puissance des moyens de chauffe 4 peut ainsi être élevée pour un appareil de type yaourtière, par exemple 600W.

Selon une forme de réalisation préférée, le programme de réalisation de préparation fermentée comporte une phase initiale de fonctionnement 40 et une phase ultérieure de fonctionnement 50.

La figure 4 montre sur la courbe 20 la température de la plaque de chauffe 14 et sur la courbe 21 la température dans la préparation, pour le programme de réalisation de préparation fermentée de type yaourt.

Tel que représenté sur la figure 4, la phase initiale de fonctionnement 40 du programme de réalisation de préparation fermentée de type yaourt utilise au moins une température de consigne initiale 41 supérieure à une température de consigne ultérieure 51 de la phase ultérieure de fonctionnement 50 du programme de réalisation de préparation fermentée de type yaourt.

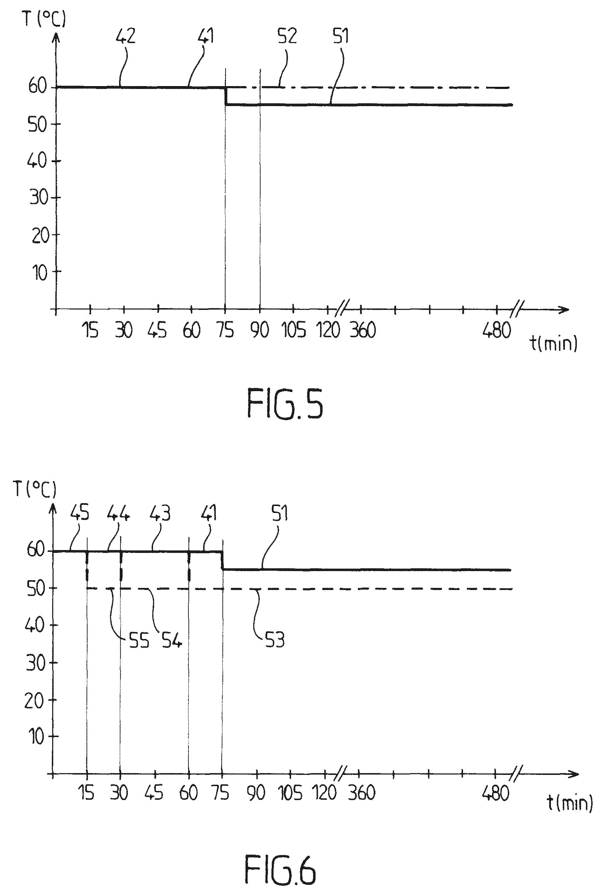

Dans la phase initiale de fonctionnement 40, le relais alimente les moyens de chauffe 4 pendant une durée déterminée, par exemple 3 minutes, de manière à obtenir dans l'enceinte 1 une température proche de la température souhaitée, puis de manière séquentielle, en utilisant une température de consigne initiale 41 par exemple de l'ordre de 60°C. Après chaque interruption d'alimentation des moyens de chauffe 4, l'alimentation des moyens de chauffe 4 est réactivée lorsque la température détectée par le capteur 30 passe en dessous de la température de consigne. La mesure de température est ainsi associée à une température de consigne basse. La durée de la phase initiale de fonctionnement est par exemple de 1 h15, tel que représenté sur les figures 5 à 7.

Dans la phase ultérieure de fonctionnement 50, le relais alimente les moyens de chauffe 4 de manière séquentielle en utilisant une température de consigne ultérieure 51 plus basse, par exemple de l'ordre de 55°C, tel que représenté sur les figures 5 à 7.

Ainsi l'apport thermique est piloté par plusieurs mesures de température et la phase initiale de fonctionnement 40 présente une température de consigne initiale 41 supérieure à une température de consigne ultérieure 51 de la phase ultérieure de fonctionnement 50. Les mesures de température sont associées à des températures de consigne basse.

La température de consigne initiale 41 correspond à une température de consigne de mise en température de l'enceinte 1, pour élever la température de la préparation contenue dans les récipients 2. La durée de la phase initiale de fonctionnement 40 est choisie pour que la température de la préparation de yaourt disposée dans les récipients 2 atteigne l'intervalle de température souhaité pour la fermentation de la préparation de yaourt, usuellement entre 40°C et 50°C. La température de consigne ultérieure 51 correspond alors à une température de consigne de maintien en température, pour compenser les pertes thermiques dues à l'ambiance de l'appareil.

Pour d'autres types de préparations fermentées, l'intervalle de température souhaité pour la fermentation peut être ajusté, par exemple entre 35°C à 40°C pour le fromage blanc ou encore entre 26°C et 30°C pour le lait fermenté de type kéfir.

Ainsi la puissance moyenne des moyens de chauffe 4 dans la phase ultérieure de fonctionnement 50 est inférieure à la puissance moyenne des moyens de chauffe 4 dans la phase initiale de fonctionnement 40, du fait d'une proportion plus importante de périodes de non alimentation dans la phase ultérieure de fonctionnement 50. La phase initiale de fonctionnement 40 du programme de réalisation de préparation fermentée de type yaourt utilise au moins une température de consigne initiale 41 supérieure à une température de consigne ultérieure 51 de la phase ultérieure de fonctionnement 50 du programme de réalisation de préparation fermentée de type yaourt.

Le programme de réalisation de préparation fermentée de type yaourt précité est toutefois bien adapté pour une température ambiante autour de 21 °C, à quelques degrés près, en d'autres termes, dans une ambiance tempérée, mais donne moins satisfaction lorsque la température ambiante s'écarte davantage de la température précitée.

Plus particulièrement selon l'invention, le microprocesseur 31 comporte au moins un autre programme de réalisation de préparation fermentée associé à la ou l'une au moins des configurations de commande du dispositif de commande 32. Le dispositif de commande 32 dans la configuration de commande met en oeuvresoit le programme de réalisation de préparation fermentée, soit l'autre ou l'un des autres programmes de réalisation de préparation fermentée, en fonction d'une température mesurée par le capteur 30.

Dans l'exemple de réalisation illustré sur les figures 5 à 7, le programme de réalisation de préparation fermentée et les autres programmes de réalisation de préparation fermentée sont prévus pour la réalisation de préparations fermentées de type yaourt.

Le dispositif de commande 32 dans la configuration pour la réalisation d'un type de préparation fermentée de type yaourt met en oeuvre soit le programme de réalisation de préparation fermentée de type yaourt, soit l'autre ou l'un des autres programmes de réalisation de préparation fermentée de type yaourt, en fonction d'une température mesurée par le capteur 30, par exemple dès que l'utilisateur a lancé la réalisation de yaourts au moyen du dispositif de commande 32.

Dans l'exemple de réalisation illustré sur les figures, le programme de réalisation de préparation fermentée de type yaourt est utilisé lorsque la température de départ mesurée par le capteur 30 est supérieure à 18°C et inférieure à 25°C.

Lorsque la température de départ mesurée par le capteur 30 est inférieure ou égale à 18°C, un autre programme de réalisation de préparation fermentée de type yaourt prévu pour une ambiance froide est utilisé, dans lequel la durée de la phase initiale de fonctionnement 40 est par exemple de 1 h30, avec une température de consigne initiale 42 initiale de 60°C, tel que visible sur la figure 5.

Ainsi la durée de la phase initiale de fonctionnement 40 dudit autre programme de réalisation de préparation fermentée de type yaourt prévu pour une ambiance froide est supérieure à la durée de la phase initiale de fonctionnement 40 du programme de réalisation de préparation fermentée de type yaourt prévu pour une ambiance tempérée.

Si désiré, plusieurs autres programmes de réalisation de préparation fermentée de type yaourt prévus pour une ambiance froide peuvent être envisagés, par exemple en modifiant la durée de la phase initiale de fonctionnement 40.

Par ailleurs, les niveaux des températures de consigne initiale 41, 42 et/ou les niveaux des températures de consigne ultérieure 51, 52 peuvent être adaptés en fonction de la construction de l'appareil et/ou du type de préparation à réaliser, notamment pour des préparations de type fromage blanc ou de type lait fermenté.

Ainsi le ou au moins l'un des autres programmes de réalisation de préparation fermentée est prévu pour une ambiance froide et comporte une phase initiale de fonctionnement 40 utilisant au moins une température de consigne initiale 42 et une phase ultérieure de fonctionnement 50 utilisant au moins une température de consigne ultérieure 52. De préférence l'écart entre la température de consigne initiale 41 ; 42 et la température de consigne ultérieure 51 ; 52 est plus important pour le programme de réalisation de préparation fermentée prévu pour une ambiance tempérée que pour le ou au moins l'un des autres programmes de réalisation de préparation fermentée prévus pour une ambiance froide.

Si désiré, la température de consigne ultérieure 52 du ou d'au moins l'un des autres programmes de réalisation de préparation fermentée prévus pour une ambiance froide est identique à la température de consigne initiale 42 du ou d'au moins l'un des autres programmes de réalisation de préparation fermentée prévus pour une ambiance froide.

Lorsque la température de départ mesurée par le capteur 30 est supérieure ou égale à 25°C, un autre programme de réalisation de préparation fermentée prévu pour une ambiance chaude est utilisé, dans lequel la durée de la phase initiale de fonctionnement 40 est par exemple de 1 h, avec une température de consigne initiale 43 de 60°C.

Ainsi la durée de la phase initiale de fonctionnement 40 dudit autre programme de réalisation de préparation fermentée prévu pour une ambiance chaude est inférieure à la durée de la phase initiale de fonctionnement 40 du programme de réalisation de préparation fermentée prévu pour une ambiance tempérée.

Si désiré, plusieurs autres programmes de réalisation de préparation fermentée prévus pour une ambiance chaude peuvent être envisagés, par exemple en modifiant la durée de la phase initiale de fonctionnement 40. Notamment pour réaliser des yaourts, si la température de départ mesurée par le capteur 30 est comprise entre 40°C et 45°C, la durée de la phase initiale de fonctionnement 40 peut être égale à 30 min ; si la température de départ mesurée par le capteur 30 est comprise entre 45°C et 50°C, la durée de la phase initiale de fonctionnement 40 peut être égale à 15 min, la température de consigne initiale 44 ; 45 restant par exemple à 60°C, la température de consigne ultérieure 54 ; 55 restant par exemple à 50°C, tel que représenté sur la figure 6. Ainsi la phase initiale de fonctionnement 40 du programme de réalisation de préparation fermentée de type yaourt présente ainsi une durée prédéterminée ; et la phase initiale de fonctionnement 40 du ou des autre(s) programme(s) de réalisation de préparation fermentée de type yaourt prévu(s) pour une ambiance froide ou pour une ambiance chaude présente aussi une durée prédéterminée.

Les niveaux des températures de consigne initiale 41, 43, 44, 45 et/ou les niveaux des températures de consigne ultérieure 51, 53, 54, 55 peuvent être adaptés en fonction de la construction de l'appareil et/ou du type de préparation à réaliser, notamment pour des préparations de type fromage blanc ou de type lait fermenté.

Ainsi le ou au moins l'un des autres programmes de réalisation de préparation fermentée est prévu pour une ambiance chaude et comporte une phase initiale de fonctionnement 40 utilisant au moins une température de consigne initiale 43 ; 44 ; 45 et une phase ultérieure de fonctionnement 50 utilisant au moins une température de consigne ultérieure 53 ; 54 ; 55. De préférence l'écart entre la température de consigne initiale 41 ; 43 ; 44 ; 45 et la température de consigne ultérieure 51 ; 53 ; 54 ; 55 est plus important pour le programme de réalisation de préparation fermentée, prévu pour une ambiance tempérée, que pour le ou au moins l'un des autres programmes de réalisation de préparation fermentée, prévus pour une ambiance chaude.

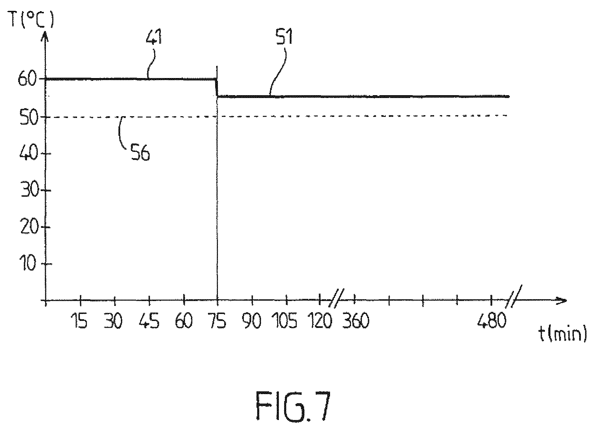

Lorsque la température de départ mesurée par le capteur 30 est supérieure ou égale à 50°C, un autre programme de réalisation de préparation fermentée prévu pour une ambiance très chaude est utilisé. Cette situation correspond par exemple à une réutilisation immédiate de l'appareil. Le programme de réalisation de préparation fermentée de type yaourt prévu pour une ambiance très chaude comporte par exemple une phase de fonctionnement utilisant une température de consigne ultérieure 56 inférieure à la température de consigne ultérieure 51 du programme de réalisation de préparation fermentée de type yaourt, tel que représenté sur la figure 7. La température de consigne ultérieure 56 est par exemple de 50°C. Ainsi le programme de réalisation de préparation fermentée de type yaourt prévu pour une ambiance très chaude est dépourvu de phase initiale de fonctionnement de durée prédéterminée.

Ainsi dans l'exemple de réalisation présenté, la température de consigne initiale 41 ; 42 ; 43 ; 44 ; 45 est identique pour le programme de réalisation de préparation fermentée et pour le ou au moins l'un des autres programmes de réalisation de préparation fermentée ; la durée de la phase initiale de fonctionnement 40 du programme de réalisation de préparation fermentée diffère de la durée de la phase initiale de fonctionnement 40 du ou d'au moins l'un des autres programmes de réalisation de préparation fermentée.

La yaourtière domestique électrique illustrée sur les figures s'utilise et fonctionne de la manière suivante. L'utilisateur soulève le couvercle principal 7, dispose dans les ouvertures du support 9 disposé sur la base chauffante 6 un ou plusieurs récipients 2 contenant une préparation à base de lait et de ferments, remet en place le couvercle principal 7 sur le support 9, et actionne les moyens de pilotage 5 pour mettre en fonctionnement les moyens de chauffe 4, en activant la configuration de commande pour la réalisation de préparation fermentée de type yaourt du dispositif de commande 32, au moyen du premier sélecteur 34 et si désiré du deuxième sélecteur 35 pour ajuster le temps de fermentation. Les moyens de pilotage 5 effectuent alors une mesure de température au moyen du capteur 30, pour mesurer la température de l'appareil, puis lancent le programme de réalisation de préparation fermentée de type yaourt, lorsque l'appareil présente une température correspondant à une ambiance tempérée, c'est-à-dire ni chaude ni froide, ou l'un des autres programmes de réalisation de préparation fermentée de type yaourt, lorsque l'appareil présente une température correspondant à une ambiance froide, à une ambiance chaude, voire à une ambiance très chaude si l'appareil vient de terminer un cycle d'utilisation.

Le procédé d'obtention de yaourt mis en oeuvre dans la yaourtière domestique électrique précitée comprend ainsi les étapes suivantes :
- activation d'une configuration de commande du dispositif de commande (32) pour la réalisation d'un type de préparation fermentée,
- réalisation d'une mesure de température en utilisant le capteur (30),
- en fonction de la température mesurée, sélection et mise en oeuvre du programme de réalisation de préparation fermentée ou du ou de l'un des autres programmes de réalisation de préparation fermentée.

Ces dispositions permettent de mieux contrôler la température de la préparation lorsque l'appareil présente au début de son fonctionnement une température s'écartant de la température ambiante usuelle. La qualité des préparations obtenues est ainsi davantage reproductible. Les yaourts restent davantage fermes et/ou peu acides. De plus l'utilisation de ferments plus sensibles à la température, tels que par exemple les ferments pour réaliser des préparations de type yaourts à 0% de matière grasse, est facilitée. L'utilisateur peut également relancer une réalisation de préparations fermentées sans devoir attendre le refroidissement de l'appareil.

A titre de variante, le dispositif de commande 32 peut comporter au moins une autre configuration de commande prévue pour la réalisation d'un type de préparation fermentée autre que le yaourt.

A titre de variante, le dispositif de commande 32 ne comporte pas nécessairement une autre configuration de commande prévue pour la réalisation de préparation fermentée de type yaourt.

A titre de variante, le programme de réalisation de préparation fermentée et/ou au moins l'un des autres programmes de réalisation de préparation fermentée pourrai(en)t comprendre plusieurs températures de consigne initiale dans la phase initiale de fonctionnement et/ou plusieurs températures de consigne ultérieure dans la phase ultérieure de fonctionnement.

A titre de variante, le ou les autres programmes de réalisation de préparation fermentée prévus pour un fonctionnement en ambiance très chaude pourraient utiliser une température de consigne correspondant à la température de consigne ultérieure utilisée dans le programme de réalisation de préparation fermentée précédant, pour prendre en compte la température ambiante de la pièce.

A titre de variante, la base chauffante 6 pourrait comprendre des moyens de chauffe 4 autres que la plaque de chauffe 14 et l'élément chauffant 17, par exemple un autocollant chauffant fixé sous une plaque supérieure de la base chauffante 6, ou encore un élément chauffant sérigraphié sous une plaque supérieure de la base chauffante 6.

Les récipients 2 sont prévus pour la réalisation de yaourts en portions séparées. La capacité utile des récipients 2, correspondant au volume de préparation susceptible d'être contenu dans les récipients 2, est par exemple comprise entre 60 et 200 ml. L'invention n'est toutefois pas limitée à la réalisation de yaourts en portions individuelles et concerne aussi des yaourtières domestiques électriques comportant un ou plusieurs récipients de capacité utile plus importante.

A titre de variante, les yaourtières domestiques électriques selon l'invention peuvent comporter au moins un récipient 2 logé dans l'enceinte 1.

La présente invention n'est nullement limitée aux exemples de réalisation décrits et à leurs variantes, mais englobe de nombreuses modifications dans le cadre des revendications.

## Revendications

1. Yaourtière domestique électrique, comportant une enceinte (1) logeant au moins un récipient (2) prévu pour recevoir une préparation à base de lait et de ferments, des moyens de chauffe (4) associés à l'enceinte (1), ainsi que des moyens de pilotage (5) pour contrôler l'alimentation des moyens de chauffe (4), les moyens de pilotage (5) comprenant un capteur (30) pour mesurer la température, un microprocesseur (31) comportant au moins un programme de réalisation de préparation fermentée, et un dispositif de commande (32) comportant au moins une configuration de commande pour la réalisation d'un type de préparation fermentée, **caractérisée en ce que** le microprocesseur (31) comporte au moins un autre programme de réalisation de préparation fermentée et **en ce que** le dispositif de commande (32) dans la configuration de commande met en oeuvre soit le programme de réalisation de préparation fermentée, soit l'autre ou l'un des autres programmes de réalisation de préparation fermentée, en fonction d'une température de départ mesurée par le capteur (30).

2. Yaourtière domestique électrique selon la revendication 1, **caractérisée en ce que** le programme de réalisation de préparation fermentée comporte une phase initiale de fonctionnement (40) et une phase ultérieure de fonctionnement (50), la puissance moyenne des moyens de chauffe (4) dans la phase ultérieure de fonctionnement (50) étant inférieure à la puissance moyenne des moyens de chauffe (4) dans la phase initiale de fonctionnement (40).

3. Yaourtière domestique électrique selon la revendication 2, **caractérisée en ce que** les moyens de chauffe (4) sont régulés en température et **en ce que** la phase initiale de fonctionnement (40) du programme de réalisation de préparation fermentée utilise au moins une température de consigne initiale (41) supérieure à une température de consigne ultérieure (51) de la phase ultérieure de fonctionnement (50) du programme de réalisation de préparation fermentée.

4. Yaourtière domestique électrique selon la revendication 3, **caractérisée en ce que** la température de consigne initiale (41 ; 42 ; 43 ; 44 ; 45) est identique pour le programme de réalisation de préparation fermentée et le ou au moins l'un des autres programmes de réalisation de préparation fermentée, et **en ce que** la durée de la phase initiale de fonctionnement (40) du programme de réalisation de préparation fermentée diffère de la durée de la phase initiale de fonctionnement (40) du ou d'au moins l'un des autres programmes de réalisation de préparation fermentée.

5. Yaourtière domestique électrique selon l'une des revendications 3 ou 4, **caractérisée en ce que** le ou au moins l'un des autres programmes de réalisation de préparation fermentée est prévu pour une ambiance froide et comporte une phase initiale de fonctionnement (40) utilisant au moins une température de consigne initiale (42) et une phase ultérieure de fonctionnement utilisant au moins une température de consigne ultérieure (52), et **en ce que** la durée de la phase initiale de fonctionnement (40) dudit autre programme de réalisation de préparation fermentée prévu pour une ambiance froide est supérieure à la durée de la phase initiale de fonctionnement (40) du programme de réalisation de préparation fermentée.

6. Yaourtière domestique électrique selon la revendication 5, **caractérisée en ce que** l'écart entre la température de consigne initiale (41 ; 42) et la température de consigne ultérieure (51 ; 52) est plus important pour le programme de réalisation de préparation fermentée que pour le ou au moins l'un des autres programmes de réalisation de préparation fermentée prévus pour une ambiance froide.

7. Yaourtière domestique électrique selon l'une des revendications 5 ou 6, **caractérisée en ce que** la température de consigne ultérieure (52) du ou d'au moins l'un des autres programmes de réalisation de préparation fermentée prévus pour une ambiance froide est identique à la température de consigne initiale (42) du ou d'au moins l'un des autres programmes de réalisation de préparation fermentée prévus pour une ambiance froide.

8. Yaourtière domestique électrique selon l'une des revendications 3 à 7, **caractérisée en ce que** le ou au moins l'un des autres programmes de réalisation de préparation fermentée est prévu pour une ambiance chaude et comporte une phase initiale de fonctionnement (40) utilisant au moins une température de consigne initiale (43 ; 44 ; 45) et une phase ultérieure de fonctionnement (50) utilisant au moins une température de consigne ultérieure (53 ; 54 ; 55), et **en ce que** la durée de la phase initiale de fonctionnement (40) dudit autre programme de réalisation de préparation fermentée prévu pour une ambiance chaude est inférieure à la durée de la phase initiale de fonctionnement (40) du programme de réalisation de préparation fermentée.

9. Yaourtière domestique électrique selon la revendication 8, **caractérisée en ce que** l'écart entre la température de consigne initiale (41 ; 43 ; 44 ; 45) et la température de consigne ultérieure (51 ; 53 ; 54 ; 55) est moins important pour le programme de réalisation de préparation fermentée que pour le ou au moins l'un des autres programmes de réalisation de préparation fermentée prévus pour une ambiance chaude.

10. Yaourtière domestique électrique selon l'une des revendications 3 à 9, **caractérisée en ce qu'**au moins un programme de réalisation de préparation fermentée est prévu pour une ambiance très chaude et comporte une phase de fonctionnement utilisant une température de consigne correspondant à la température de consigne ultérieure (51) du programme de réalisation de préparation fermentée.

11. Yaourtière domestique électrique selon l'une des revendications 1 à 10, **caractérisée en ce que** la phase initiale de fonctionnement (40) du programme de réalisation de préparation fermentée présente une durée prédéterminée.

12. Yaourtière domestique électrique selon la revendication 11, **caractérisée en ce que** la phase initiale de fonctionnement (40) de l'autre ou des autres programme(s) de réalisation de préparation fermentée prévu(s) pour une ambiance froide ou pour une ambiance chaude présente une durée prédéterminée.

13. Yaourtière domestique électrique selon l'une des revendications 1 à 12, **caractérisée en ce que** l'enceinte (1) comporte une base chauffante (6) comprenant une plaque de chauffe (14) sous laquelle sont agencés les moyens de chauffe (4) et **en ce que** le capteur (30) est monté sous la plaque de chauffe (14) à distance des moyens de chauffe (4).

14. Yaourtière domestique électrique selon la revendication 13, **caractérisée en ce que** le capteur (30) est monté contre la plaque de chauffe (14).

15. Yaourtière domestique électrique selon l'une des revendications 13 ou 14, **caractérisée en ce que** la base chauffante (6) est surmontée d'un couvercle principal (7).

16. Yaourtière domestique électrique selon l'une des revendications 13 à 15, **caractérisée en ce que** ledit récipient (2) est suspendu au dessus et à distance de la base chauffante (6).

17. Yaourtière domestique électrique selon la revendication 16, **caractérisée en ce que** l'enceinte (1) comporte un support (9) de récipient (2) intercalé entre la base chauffante (6) et le couvercle principal (7).

18. Procédé d'obtention de préparation fermentée mis en oeuvre dans une yaourtière domestique électrique selon l'une des revendications 1 à 17, comprenant les étapes suivantes :
- activation d'une configuration de commande du dispositif de commande (32) pour la réalisation d'un type de préparation fermentée,
- réalisation d'une mesure de température en utilisant le capteur (30),
- en fonction de la température mesurée, sélection et mise en oeuvredu programme de réalisation de préparation fermentée ou de l'un des autres programmes de réalisation de préparation fermentée.
